# EUROPÄISCHE PATENTSCHRIFT

(11) **EP 2 414 501 B1**
(45) Veröffentlichungstag und Bekanntmachung des Hinweises auf die Patenterteilung: **31.10.2018**
(21) Anmeldenummer: 10711889.5
(22) Anmeldetag: 30.03.2010
(51) Int. Cl.: C12C 5/02, C12G 3/06

(54) **MISCHGETRÄNK**
MIXED DRINK
BOISSON MÉLANGÉE

(30) Priorität: 30.03.2009 DE 102009015591
(43) Veröffentlichungstag der Anmeldung: 08.02.2012
(73) Patentinhaber: Reiser, Robert, 82024 Taufkirchen (DE)
(72) Erfinder: Reiser, Robert, 82024 Taufkirchen (DE)
(74) Vertreter: RatnerPrestia
(86) Internationale Anmeldenummer: PCT/EP2010/054174
(87) Internationale Veröffentlichungsnummer: WO 2010/112494

(56) Entgegenhaltungen:
- EP-A2- 1 197 547
- DE-A1- 3 217 011
- DE-A1- 3 601 582
- DE-A1- 10 314 122
- DE-A1- 19 542 259
- DE-A1-102004 017 844
- DE-U1-202006 008 532
- US-A- 4 885 184
- US-A1- 2005 260 324

## Beschreibung

Die Erfindung betrifft ein Mischgetränk umfassend eine fermentierte Flüssigkeit und eine Aromastoffzusammensetzung. Weiter betrifft die Erfindung ein Verfahren zur Herstellung des erfindungsgemäßen Mischgetränkes.

Mischgetränke, und vor allem alkoholische Mischgetränke, erfreuen sich seit geraumer Zeit immer größerer Beliebtheit. Insbesondere Biermischgetränke sind dabei, einen immer größeren Marktanteil einzunehmen.

Die US 2005/0260324 offenbart ein aromatisiertes Weingetränk mit einem Weinanteil von bis zu 99,4%, das außerdem zwischen 0,5 und 5% eines rektifizierten Traubenmostkonzentrats mit einem Zuckergehalt zwischen 60 und 75 °Brix und mindestens 0,1% einer Aromamischung, enthaltend Vanillearoma und Vanilleextrakt in Ethanol, umfasst. Die Aromatisierung des Weingetränks verstärkt die organoleptischen Merkmale des Weines, ohne hierfür die im Stand der Technik üblichen Fruchtaromen zu verwenden.

Die EP 1 197 547 beschreibt ein alkoholisches Heißgetränk, das aus zumindest 50 Volumenprozent Bier und einem Anteil an Fruchtstoff- oder Pflanzenstoffkonzentrat, vorzugsweise Kirschsirup, besteht, sowie ein Verfahren zu dessen Herstellung.

Die DE 103 14 122 betrifft ein alkoholisches Getränk mit einem Ethanolgehalt von 16 bis 42%, bei dem ein Gemisch bestehend aus Gerstenröstmalz und Hopfenextrakt mit 25 bis 75 Gew.-% Bier sowie Ethanol und Wasser aufgefüllt wird. Zusätzlich können Zitronenessenz, Schlehenaroma, Caramel und Zuckercouleur enthalten sein. Das Getränk flockt weder bei Wärme- oder Kältezufuhr noch durch Schütteln aus, so dass Geschmack und Aussehen durch diese Umstände nicht beeinflusst werden können.

Die DE 10 2004 017 844 beschreibt weinähnliche Getränke mit hervorgehobenem Geschmack und Duft von Pflanzen, insbesondere Rosen, sowie ein Verfahren zu deren Herstellung. Durch die Verwendung von natürlichen Zusatzstoffen, die dem Wein zugesetzt und in diesem gleichmäßig verteilt werden, kann Trübung verhindert und die Einhaltung von lebensmittelhygienischen Vorschriften bei ausreichender Lagerstabilität erreicht werden.

Das Gebrauchsmuster DE 20 2006 008 532 betrifft ein alkoholhaltiges Mischgetränk aus Tee und Wein, wobei der Anteil an Wein zwischen 5 und 95 % beträgt.

Die DE 3217011 offenbart ein Verfahren zur Herstellung eines Getränkes aus Weizenbier, insbesondere Hefe-Weizenbier, und Fruchtsaft oder Fruchtsirup, insbesondere Himbeersirup, welcher dem Weizenbier vor oder bei dessen Abfüllung in Flaschen gleichmäßig dosiert (30 bis 40 cm³ pro Liter Weizenbier) zugegeben wird.

Die Herstellung solcher Mischgetränke ist jedoch aufwendig, da das Mischen der einzelnen Inhaltsstoffe nicht willkürlich erfolgen kann und mit Rücksicht auf das chemische Verhalten der einzelnen Bestandteile zueinander erfolgen muss. Dabei ist insbesondere problematisch, dass die Inkompatibilität einzelner Bestandteile die Haltbarkeit solcher Produkte stark begrenzt. Insbesondere ist es problematisch, dass in der fermentierten Flüssigkeit enthaltene Eiweißstoffe durch den hohen Alkoholanteil bedingt während der Lagerung ausfallen und zu einer Trübung des Mischgetränkes sowie einer veränderten Sensorik führen.

Aufgabe der vorliegenden Erfindung war es daher ein Mischgetränk aus fermentierter Flüssigkeit zu finden, insbesondere ein Biermischgetränk oder Weinmischgetränk, das trotz der Kombination vielfältiger Einzelbestandteile, insbesondere der Kombination von Eiweißstoffen und Alkohol, auch bei längerer Lagerung stabil bleibt und keinerlei chemischen Veränderungen unterliegt, die die sensorische Qualität des Mischgetränks verändern.

Es wurde nun überraschend gefunden, dass die Stabilität von Mischgetränken aus fermentierter Flüssigkeit durch die Zugabe eines bestimmten Anteils einer Aromastoffzusammensetzung signifikant erhöht werden kann. Ein weiterer Vorteil ist überdies, dass die eingesetzten Aromastoffe nicht nur eine Stabilisierung der Mischgetränke bewirken, sondern ferner gleichzeitig auch die Komposition vielfältiger neuer Geschmacksrichtungen ermöglicht wird ohne dass eine oder mehrere zusätzliche Komponenten eingesetzt werden müssen, die der Stabilisierung dienen oder zusätzliche Produktionsschritte erforderlich sind.

Die vorliegende Erfindung betrifft demnach ein Mischgetränk umfassend 90 bis 99,9 Gew.-% einer fermentierten Flüssigkeit und 0,09 bis 5 Gew.-% einer Aromastoffzusammensetzung, dadurch gekennzeichnet, dass die Aromastoffzusammensetzung 10 bis 40 Gew.-% mindestens eines Aromastoffs ausgewählt aus der Gruppe bestehend aus natürlichen Aromastoffen, künstlichen Aromastoffen, naturidentischen Aromastoffen, Raucharomastoffen, Aromaextrakten und Reaktionsaromen und 60 bis 90 Gew.-% Ethanol, Propylenglykol, Branntwein oder Mischungen davon, jeweils bezogen auf die Aromastoffzusammensetzung, enthält.

Unter der Bezeichnung "Mischgetränk" wird im Rahmen der Erfindung jedes Gemisch von zwei oder mehr Flüssigkeiten verstanden, das die vorstehend definierten Vorgaben von 90 bis 99,9 Gew.-% einer fermentierten Flüssigkeit und 0,09 bis 5 Gew.-% einer Aromastoffzusammensetzung erfüllt. Eine Flüssigkeit ist im Rahmen der Erfindung dabei als eine Substanz definiert mit einer kinetischen Viskosität η = 0,01 bis 2000 mPa s.

Unter einer "fermentierten Flüssigkeit" wird im Rahmen der Erfindung jede Flüssigkeit verstanden, die unter dem Einfluss von Mikroorganismen, insbesondere Bakterien, Hefen und/oder Schimmelpilzen, aber auch durch den direkten Einsatz von Enzymen strukturell und/oder chemisch verändert bzw. fermentiert wurde. Bevorzugt handelt es sich dabei um eine Fermentation durch Hefen und/oder Milchsäurebakterien.

Bevorzugt handelt es sich bei der fermentierten Flüssigkeit um eine fermentierte Maische. Bei der Maische handelt es sich bevorzugt um eine Getreidemaische, ausgewählt aus der Gruppe bestehend aus Weizen-, Gerste-, Hafer-, Roggen-, Dinkel-, Buchweizen-, Emmer-, Erbsen-, Bohnen-, und Reismaische; eine Kartoffelmaische; eine Maismaische; eine Zuckerrohrmaische; eine Zuckerrübenmaische; eine Ahornsirupmaische; eine Obstmaische ausgewählt aus der Gruppe bestehend aus Trauben-, Apfel-, Birnen-, Schlehen-, Himbeer-, Brombeer-, Preiselbeer-, Blaubeer-, Kirschen-, Aprikosen-, Mirabellen-, Pflaumen- und Zwetschgenmaische; und Mischungen aus einer oder mehrerer davon.

Am meisten bevorzugt handelt es sich bei der fermentierten Maische um ein Bier oder Bier-ähnliches Getränk.

Unter dem Begriff "Bier oder Bier-ähnliches Getränk" wird im Rahmen der vorliegenden Erfindung jedes alkoholhaltige Getränk verstanden, das auf Basis von verzuckerter (hydrolisierter) Stärke hergestellt wurde, ohne dass dabei ein Destillationsverfahren angewandt wurde. Bevorzugt werden die Zuckermoleküle aus der Stärke von Getreide (wie beispielsweise Gerste, Roggen, Reis, Weizen, Mais) gewonnen, es ist aber auch möglich, dass die Stärke aus Kartoffeln oder anderem Gemüse wie Erbsen oder Bohnen gewonnen wird. Weiter ist es möglich, dass die Stärke eine Kombination der Stärken verschiedener Getreide, Kartoffeln und/oder Gemüse ist. Der japanische Sake fällt somit ebenfalls unter die Definition der Bier-ähnlichen Getränke.

Die Maische wird entweder durch natürlich in der Flüssigkeit vorhandene und/oder extra zugesetzte Mikroorganismen fermentiert, die aus einer Anzahl geeigneter Stämme speziell ausgewählt wurden. Es ist im Rahmen der vorliegenden Erfindung jedoch auch möglich, dass die Fermentation durch künstlich zugesetzte Enzyme bewirkt wird. Weiter ist es möglich, dass die Fermentation durch eine Kombination von Mikroorganismen und künstlichen zugesetzten Enzymen durchgeführt wird. Die Enzyme können dabei aus natürlichen Quellen wie beispielsweise Mikroorganismen oder Pflanzen isoliert worden sein, sie können aber auch künstlich hergestellt worden sein. Weiter ist es im Rahmen der vorliegenden Erfindung möglich, natürliche Mikroorganismen wie auch genetisch veränderte Mikroorganismen einzusetzen oder auch eine Kombination davon.

Wird im Rahmen der vorliegenden Erfindung beispielsweise eine Getreidemaische eingesetzt, so wird durch die Fermentation die in der Maische vorhandene Getreidestärke zunächst zu kürzeren Zuckermolekülen bis hin zu einem Anteil von (oder vollständig) zu Mono- und Disacchariden hydrolysiert, die kürzeren Zuckermoleküle werden sodann beispielsweise von Hefen zu Alkohol und Kohlenstoffdioxid umgesetzt. Wird im Rahmen der vorliegenden Erfindung beispielsweise eine Obstmaische eingesetzt, so können die in der Maische vorhandenen kürzeren Zucker direkt von Hefen zu Alkohol und Kohlenstoffdioxid umgesetzt werden.

Die fermentierte Flüssigkeit wird in dem Mischgetränk der vorliegenden Erfindung in einer Konzentration von 90 bis 99,9 Gew.-%, bevorzugt 92 bis 99 Gew.-%, bevorzugter 95 bis 98 Gew.- % und am meisten bevorzugt 96 bis 97 Gew.-% (jeweils bezogen auf das Mischgetränk) eingesetzt.

Handelt es sich bei der fermentierten Flüssigkeit um ein Bier oder Bier-ähnliches Getränk, so besitzt dieses bevorzugt einen Alkoholgehalt von 2 bis 8 Vol.-%, bevorzugter 4 bis 7 Vol.-% und am meisten bevorzugt von 5 bis 6 Vol.-% (jeweils bezogen auf das Volumen der fermentierten Flüssigkeit. Besonders bevorzugt handelt es sich bei der fermentierten Flüssigkeit im Rahmen der Erfindung um ein Weizen- oder Gerstenbier.

Bevorzugt umfasst das Mischgetränk der vorliegenden Erfindung eine Aromastoffzusammensetzung enthaltend 0,01 bis 9 Gew.-% mindestens eines Aromastoffes, bevorzugter 0,02 bis 0,2 Gew.-%, weiter bevorzugt 0,025 bis 0,15 Gew.-% und am meisten bevorzugt 0,03 bis 0,1 Gew.-% (jeweils bezogen auf das Gesamtgewicht des Mischgetränks). Es ist dabei möglich, dass - sofern ein Gemisch von einem oder mehr Aromastoffen eingesetzt wird - die Konzentration der einzelnen Aromastoffe gleich oder unterschiedlich gewählt wird.

Unter dem Begriff "Aromastoff" wird im Rahmen der vorliegenden Erfindung jede Substanz verstanden, die dem Fachmann unter dieser Bezeichnung bekannt ist. Bevorzugt handelt es sich bei den im Rahmen der Erfindung eingesetzten Aromastoffen um natürliche Aromastoffe, künstliche Aromastoffe, naturidentische Aromastoffe, Raucharomastoffe, Aromaextrakte und Reaktionsaromen. Besonders bevorzugt werden natürliche, naturidentische und künstliche Aromastoffe entweder allein oder in Kombination eingesetzt.

Bevorzugt werden im Rahmen der vorliegenden Erfindung Aromastoffe ausgewählt aus der Gruppe bestehend aus: Fruchtaromen ausgewählt aus Apfel-, Birnen-, Kirsch-, Zitronen-, Orangen-, Grapefruit-, Cranberry-, Blaubeer-, Preiselbeer-, Quitten-, Himbeer-, Erdbeer-, Feigen-, Aprikosen-, Mirabellen-, Brombeer-, Schlehen-,Pflaumen- und Zwetschgenaroma; Branntweinaromen ausgewählt aus Whiskey-, Sherry-, Rotwein-, Weißwein-, Cognac-, Rum-, Calvados-, Portwein-, Brandy-, Gin-, Absinth-, Wodka-, Grappa-, Cachaça-, Sekt-, Prosecco-, Champagner-, Marsala-, Dubonnet-, Vermouth-, Cynar-, Picon-, Tequila-, Raki-, Pastis-, Ouzo-, Suze-, Lillet-, Wermut-, Pommeau-, Sambuca-, Cassis-, Armagnacaroma; Kräuteraroma ausgewählt aus Waldmeister-, Pfefferminz-, Kamille-, Oregano-, Minze-, Salbei-, Rosmarin-, Thymian-, Basilikum- und Melissenaroma; Gewürzaroma ausgewählt aus Zimt-, Anis-, Lorbeer-, Wacholder-, Sternanis-, Piment-, Pfeffer-, Muskat-, Nelken-, Kardamon- und Chiliaroma; Teearoma ausgewählt aus Grüntee-, Schwarztee-, Roibusch-, Matetee- und Kombuchaaroma; Kaffeearoma; Schokoladenaroma; oder einer Mischung aus zwei oder mehr der vorgenannten Aromastoffe eingesetzt.

Der Aromastoff wird im Rahmen der vorliegenden Erfindung bevorzugt gelöst in einem Lösungsmittel eingesetzt, bei dem es sich besonders bevorzugt um Alkohol handelt, der am meisten bevorzugt ausgewählt ist aus der Gruppe bestehend aus Ethanol, Propylenglykol oder Branntwein und Mischungen der genannten.

Durch die vorherige Vermischung der Aromastoffe mit dem Alkohol (z.B. Branntwein) entsteht ein quasi "vergällter" Alkohol, der nicht der Branntweinsteuer unterliegt. Weitere technisch relevante Vorteile werden im Abschnitt des Herstellungsverfahrens unten ersichtlich.

In einer Ausführungsform der Erfindung ist es bevorzugt, dass die Aromastoffzusammensetzung 10 bis 40 Gew.-% mindestens eines Aromastoffes ausgewählt aus der Gruppe bestehend aus natürlichen Aromastoffen, künstlichen Aromastoffen, naturidentischen Aromastoffen, Raucharomastoffen, Aromaextrakten und Reaktionsaromen und 60 bis 90 Gew.% Branntwein, jeweils bezogen auf das Gesamtgewicht der Aromastoffzusammensetzung, enthält.

Der Branntwein ist bevorzugt ausgewählt aus der Gruppe bestehend aus Whiskey, Sherry, Rotwein, Weißwein, Cognac, Rum, Calvados, Portwein, Brandy, Gin, Absinth, Wodka, Grappa, Cachaça, Sekt, Prosecco, Champagner, Marsala, Dubonnet, Vermouth, Cynar, Picon, Tequila, Raki, Pastis, Ouzo, Suze, Lillet, Pommeau, Kräuterliköre, Sambuca, Orangenlikör, Cassis und Armagnac sowie Mischungen davon.

Unter dem Begriff "Branntwein" werden im Rahmen der vorliegenden Erfindung alle dem Fachmann unter dieser Bezeichnung geläufigen Alkohol-haltigen Getränke verstanden, bevorzugt sind jedoch Whiskey, Sherry, Rotwein, Weißwein, Cognac, Rum, Calvados, Portwein, Brandy, Gin, Absinth, Wodka, Grappa, Cachaça, Sekt, Prosecco, Champagner, Marsala, Dubonnet, Vermouth, Cynar, Picon, Tequila, Raki, Pastis, Ouzo, Suze, Lillet, Martini, Pommeau, Kräuterliköre, Sambuca, Orangenlikör, Cassis und Armagnac sowie Mischungen davon. Besonders bevorzugt sind im Rahmen der vorliegenden Erfindung Tequila, Cachaça, Absinth und Wodka.

Desweiteren umfasst das Mischgetränk der vorliegenden Erfindung bevorzugt eine Zucker- und/oder Zuckeraustauschstoff - Lösung (im Folgenden werden unter den Begriff "Zuckerlösung" sowohl Lösungen von Mono- und Disacchariden wie auch längeren Zuckermolekülen als auch Lösungen verstanden, die einen oder mehrere Zuckeraustauschstoffe enthalten). Bevorzugt enthält das Mischgetränk kein Thaumatin.

Die Zuckerlösung wird dabei in dem Mischgetränk der vorliegenden Erfindung bevorzugt in einer Konzentration von 0,1 bis 10 Gew.-%, bevorzugter 0,2 bis 5 Gew.-%, besonders bevorzugt von 0,5 bis 4 Gew.-% und am meisten bevorzugt in einer Konzentration von 1 bis 2,5 Gew.-% (bezogen auf das Gesamtgewicht des Mischgetränks) eingesetzt.

Bei der Zuckerlösung handelt es sich im Rahmen der Erfindung bevorzugt um eine hydrolysierte Stärkelösung, eine reine Glucoselösung, eine reine Saccharoselösung, eine reine Fructoselösung, eine reine Maltoselösung oder auch Mischungen davon mit einem Zuckergehalt von 45 bis 70 °Brix, bevorzugt 50 bis 69 °Brix, bevorzugter 55 bis 68 °Brix und am meisten bevorzugt 60 bis 67 °Brix. Grad Brix, auch °Brix, Brix, %Brix, ist eine Maßeinheit der spezifischen Dichte von Flüssigkeiten. Eine Flüssigkeit hat ein Grad Brix (=1 % Brix), wenn sie dieselbe Dichte hat wie eine Lösung von 1 g Saccharose in 100 g Saccharose/Wasser-Lösung; sie hat 10 Brix (=10 % Brix), wenn ihre Dichte die einer Lösung von 10 g Saccharose in 100 g Saccharose/Wasser-Lösung (entspricht einer zehnprozentigen Lösung) ist. Saccharoselösung ist hierbei nur die Vergleichssubstanz, die untersuchte Flüssigkeit muss keine Saccharose enthalten.

Es ist jedoch im Rahmen der vorliegenden Erfindung auch bevorzugt, dass anstatt oder in Kombination mit der hydrolysierten Stärkelösung eine Lösung eines oder mehrerer Zuckeraustauschstoffe eingesetzt wird. Als Zuckeraustauschstoff können alle Substanzen eingesetzt werden, die dem Fachmann als Zuckeraustauschstoff bekannt sind, bevorzugt handelt es sich jedoch um Sorbit (E 420), Mannit (E 421), Isomalt (E 953), Maltit (E 965), Maltitol-Sirup (E 965), Lactit (E 966), Xylit (E 967) und/oder Fructose.

Weiter ist es im Rahmen der vorliegenden Erfindung möglich, dass anstatt oder in Kombination mit der hydrolysierten Stärkelösung und der Lösung eines oder mehrerer Zuckeraustauschstoffe eine Lösung eines oder mehrerer Süßstoffe eingesetzt wird. Als Süßstoff können alle Substanzen eingesetzt werden, die dem Fachmann als Süßstoff bekannt sind, bevorzugt handelt es sich jedoch um Acesulfam (E 950), Aspartam (E 951), Aspartam-Acesulfam-Salz (E 962), Cyclamat (E 952), Saccharin (E 954), Sucralose (E955), Thaumatin (E 957)und/oder Neohesperidin (E 959).

Desweiteren umfasst das Mischgetränk der vorliegenden Erfindung bevorzugt eine oder mehrere organische Säuren ausgewählt aus der Gruppe bestehend aus Weinsäure, Milchsäure, Ascorbinsäure, Zitronensäure, Äpfelsäure und Mischungen davon, wobei Zitronensäure besonders bevorzugt ist.

Die Säure kann dabei in einer Konzentration von 0,01 bis 0,5 Gew.-%, bevorzugter 0,02 bis 0,4 Gew.-%, weiter bevorzugt von 0,05 bis 0,2 Gew.-% und am meisten bevorzugt von 0,1 bis 0,15 Gew.-% eingesetzt werden.

Im Sinne dieser Erfindung ist ein Mischgetränk bevorzugt, bestehend aus
90 bis 99,95 Gew.-% einer fermentierten Getreidemaische
0,02 bis 5 Gew.-% hydrolysierte Stärkelösung (55 bis 70 °Brix)
0,01 bis 0,5 Gew.-% Zitronensäure
0,02 bis 1,0 Gew.-% Aromastoffzusammensetzung,
wobei die Aromastoffzusammensetzung 20 bis 30 Gew.-% mindestens eines Aromastoffs oder eines Aromastoffgemisches und 70 bis 80 Gew.-% Branntwein, bezogen auf das Gesamtgewicht der Aromastoffzusammensetzung, enthält.

Insbesondere bevorzugt ist dabei, dass die Aromastoffzusammensetzung 25 Gew.-% Aromastoffgemisch bestehend aus Fruchtaroma, Branntweinaroma und Gewürzaroma und 75 Gew.-% Tequila, bezogen auf das Gesamtgewicht der Aromastoffzusammensetzung, enthält.

Bevorzugt ist ferner dass die Aromastoffzusammensetzung 25 Gew.-% Aromastoffgemisch bestehend aus Fruchtaroma, Branntweinaroma und Gewürzaroma und 75 Gew.-% Cachaça, Absinth oder Wodka bezogen auf das Gesamtgewicht der Aromastoffzusammensetzung, enthält.

Die vorliegende Erfindung betrifft in einem weiteren Aspekt ein Verfahren zur Herstellung des erfindungsgemäßen Mischgetränkes. Das Mischgetränk der vorliegenden Erfindung kann dabei durch Vermischen der einzelnen Komponenten hergestellt werden.

Ein im Rahmen der Erfindung besonders bevorzugtes Verfahren zur Herstellung des erfindungsgemäßen Mischgetränkes umfasst jedoch die folgenden Schritte:
a) Herstellen einer Aromastoffzusammensetzung b) Mischen der Aromastoffzusammensetzung mit einer fermentierten Flüssigkeit wobei die Aromastoffzusammensetzung aus Schritt a) vor dem Durchführen von Schritt b) über einen Zeitraum von einer Stunde bis einem Monat gelagert wird.

Zum Herstellen der Aromastoffzusammensetzung wird mindestens ein Aromastoff, vorzugsweise eine Aromastoffmischung, mit einer Alkoholkomponente, ausgewählt aus Ethanol, Propylenglykol oder Branntwein und Mischungen der genannten, vermischt. Weiter ist es im Rahmen der Erfindung besonders bevorzugt, wenn die Mischung aus Schritt a) vor dem Durchführen von Schritt b) über einen Zeitraum von einer Stunde bis einem Monat, bevorzugt 5 Stunden bis 2 Wochen, besonders bevorzugt von 24 Stunden bis einer Woche und am meisten bevorzugt von 2 Tagen bis 5 Tagen gelagert wird. Die Lagerung kann dabei unter jeden Bedingungen erfolgen, die dem Fachmann für den erfindungsgemäßen Zweck als geeignet bekannt ist, erfolgt jedoch bevorzugt in einem Stahltank, insbesondere einem Edelstahltank, bei Raumtemperatur und Normaldruck.

Schließlich ist es besonders bevorzugt, wenn die Mischung aus Schritt a) des erfindungsgemäßen Verfahrens vor dem Durchführen von Schritt b) dekantiert oder gefiltert wird. Dabei ist es am meisten bevorzugt, wenn der Schritt des Dekantierens oder Filterns nach einem Schritt der Lagerung stattfindet. Die Dekantierung oder Filterung kann dabei auf jede Art und Weise durchgeführt werden, die dem Fachmann als für den erfindungsgemäßen Zweck geeignet bekannt ist.

Dieses im Rahmen der vorliegenden Erfindung bevorzugte Verfahren besitzt den Vorteil, dass eine noch höhere, vorzugsweise 5 - 30% höhere, proteolytische Stabilität des Mischgetränkes gegenüber Mischgetränken des Stands der Technik erzielt wird, da überraschenderweise der mindestens eine Aromastoff durch das "Vor"-Mischen mit dem Alkohol- bzw. Branntweinanteil besonders stabil ist.

Gegenstand der Erfindung ist ferner das nach dem erfindungsgemäßen Verfahren hergestellte Mischgetränk. Dieselben Bevorzugungen wie beim Mischgetränk oben angegeben gelten auch hier.

### Beispiele

Die Erfindung soll im Folgenden anhand von Beispielen, die jedoch lediglich veranschaulichenden Charakter haben und den Rahmen der Erfindung in keinster Weise einschränken, näher beschrieben werden. Die Beispiele stellen dabei bevorzugte Ausführungsformen des erfindungsgemäßen Mischgetränkes, angegeben in Form ihrer eingesetzten Komponenten, dar.

In allen Beispielen erfolgt zuerst die Herstellung der Aromastoffzusammensetzung (Bouquet) durch Vermischen der einzelnen Aromastoffe mit dem entsprechenden Branntwein. Im Anschluss daran erfolgt eine fünftägige Lagerung der Aromastoffzusammensetzung, wobei eine eventuell anfallende Ausfällung entfernt wird. Erst danach erfolgt die Herstellung des Mischgetränks durch Zugabe der Aromastoffzusammensetzung und der weiteren Komponenten.

### Beispiel 1

Mischgetränk basierend auf Gerstenbier und Tequila

**Tabelle 1 (alle Angaben in g)**

| **Komponenten** | **Zusammensetzung A** | **Zusammensetzung B** | **Zusammensetzung C** |
|---|---|---|---|
| **Gerstenbier** (5,5 Vol.-%) | 97,235 | 97,235 | 97,235 |
| **Tequila** (40 Vol.-%) | 0,1125 | 0,1125 | 0,1125 |
| **Zuckersirup** (67 °Brix) | 2,5 | 2,5 | 2,5 |
| **Zitronensäure** | 0,115 | 0,115 | 0,115 |
| **Obstaroma** | | | |
| Grapefruit | 0,003 | 0,003 | 0,0025 |
| Zitrone | 0,0108 | 0,0108 | 0,0108 |
| Limone | 0,0065 | 0,0072 | 0,0065 |
| Orange | 0,0009 | 0,0009 | 0,0009 |
| Aprikose | 0,0007 | - | 0,0007 |
| Pomelo | - | - | 0,0005 |
| Bitter-Orange | 0,0072 | 0,0072 | 0,0072 |
| Mandarine | 0,0009 | 0,0009 | 0,0009 |
| **Gewürzaroma** | | | |
| Kardamon | 0,000075 | - | 0,000075 |
| Chili | 0,0003 | 0,000375 | 0,0003 |
| Piment | 0,000375 | 0,000375 | 0,000365 |
| Nelke | - | - | 0,00001 |
| **Branntweinaroma** | | | |
| Rotwein Rum | 0,0027 | 0,0027 | 0,0027 |
| Whiskey | 0,00135 | 0,00135 | 0,00135 |
| Brandy | 0,0005 | - | 0,001 |
| | 0,0022 | 0,0027 | 0,0017 |

### Beispiel 2

Mischgetränk basierend auf Weizenbier und Absinth

**Tabelle 2 (alle Angaben in g)**

| **Komponenten** | **Zusammensetzung A** | **Zusammensetzung B** | **Zusammensetzung C** |
|---|---|---|---|
| **Gerstenbier** (5,5 Vol.-%) | 97,235 | 97,235 | 97,235 |
| **Absinth** (40 Vol.-%) | 0,0625 | 0,0625 | 0,0625 |
| **Zuckersirup** (67 °Brix) | 2,525 | 2,525 | 2,525 |
| **Zitronensäure** | 0,14 | 0,14 | 0,14 |
| **Obstaroma** | | | |
| Grapefruit | 0,003 | 0,003 | 0,0032 |
| Zitrone | 0,0108 | 0,0108 | 0,0108 |
| Limone | 0,0065 | 0,0072 | 0,0065 |
| Orange | 0,0009 | 0,0009 | 0,0009 |
| | 0,0007 | - | 0,0005 |
| Pomelo | 0,0072 | 0,0072 | 0,0072 |
| Bitter-Orange Mandarine | 0,0009 | 0,0009 | 0,0009 |
| **Gewürzaroma** | | | |
| Kardamon | 0,000075 | - | 0,000075 |
| Chili | 0,000300 | 0,000375 | 0,0003 |
| Piment | 0,000375 | 0,000375 | 0,000365 |
| Nelke | - | - | 0,00001 |
| **Branntweinaroma** | | | |
| Rotwein | | | |
| Rum | 0,0027 | 0,0027 | 0,0027 |
| Whiskey | 0,00135 | 0,00135 | 0,00135 |
| Brandy | 0,0005 | - | 0,001 |
| | 0,0022 | 0,0027 | 0,0017 |

### Beispiel 3

Mischgetränk basierend auf Weizenbier und Wodka

**Tabelle 3 (alle Angaben in g)**

| **Komponenten** | **Zusammensetzung A** | **Zusammensetzung B** | **Zusammensetzung C** |
|---|---|---|---|
| **Gerstenbier** (5,5 Vol.-%) | 97,235 | 97,235 | 97,235 |
| **Wodka** (40 Vol.-%) | 0,0625 | 0,0625 | 0,0625 |
| **Zuckersirup** (67 °Brix) | 2,525 | 2,525 | 2,525 |
| **Zitronensäure** | 0,14 | 0,14 | 0,14 |
| **Obstaroma** | | | |
| Grapefruit | 0,003 | 0,003 | 0,0025 |
| Zitrone | 0,0108 | 0,0108 | 0,0108 |
| Limone | 0,0065 | 0,0072 | 0,0065 |
| Orange Aprikose | 0,0009 | 0,0009 | 0,0009 |
| Pomelo | 0,0007 | - | 0,0005 |
| Bitter-Orange | - | - | 0,0007 |
| Mandarine | 0,0072 | 0,0072 | 0,0072 |
| | 0,0009 | 0,0009 | 0,0009 |
| **Gewürzaroma** | | | |
| Kardamon | 0,000075 | - | 0,000075 |
| Chili | 0,000300 | 0,000375 | 0,0003 |
| Piment | 0,000375 | 0,000375 | 0,000365 |
| Nelke | - | - | 0,00001 |
| **Branntweinaroma** | | | |
| Rotwein | 0,0027 | 0,0027 | 0,0027 |
| Rum Whiskey | 0,00135 | 0,00135 | 0,00135 |
| Brandy | 0,0005 | - | 0,001 |
| | 0,0022 | 0,0027 | 0,0017 |

### Beispiel 4

Mischgetränk basierend auf Weizenbier und Cachaça

**Tabelle 4 (alle Angaben in g)**

| **Komponenten** | **Zusammensetzung A** | **Zusammensetzung B** | **Zusammensetzung C** |
|---|---|---|---|
| **Gerstenbier** (5,5 Vol.-%) | 97,235 | 97,235 | 97,235 |
| Cachaça (40 Vol.-%) | 0,0625 | 0,0625 | 0,0625 |
| **Zuckersirup** (67 °Brix) | 2,525 | 2,525 | 2,525 |
| **Zitronensäure** | 0,14 | 0,14 | 0,14 |
| **Obstaroma** | | | |
| Grapefruit | 0,003 | 0,003 | 0,0025 |
| Zitrone | 0,0108 | 0,0108 | 0,0108 |
| Limone | 0,0065 | 0,0072 | 0,0065 |
| Orange | 0,0009 | 0,0009 | 0,0009 |
| Aprikose Pomelo | 0,0007 | - | 0,0005 |
| | - | - | 0,0007 |
| Bitter-Orange | 0,0072 | 0,0072 | 0,0072 |
| Mandarine | 0,0009 | 0,0009 | 0,0009 |
| **Gewürzaroma** Kardamon | - | - | 0,000075 |
| Chili | 0,000075 | 0,000375 | 0,0003 |
| Piment | 0,0003 | 0,000375 | 0,000365 |
| Nelke | 0,000375 | - | 0,00001 |
| **Branntweinaroma** | | | |
| Rotwein | | | |
| Rum | 0,0027 | 0,0027 | 0,0027 |
| Whiskey | 0,00135 | 0,00135 | 0,00135 |
| Brandy | 0,0005 | - | 0,001 |
| | 0,0022 | 0,0027 | 0,0017 |

Nach Lagerung der Mischgetränke über einen Zeitraum von 1 Jahr bei 4 - 8° C wurde visuell keine Veränderung der Mischgetränke festgestellt. Es findet weder eine Trübung noch eine Ausfällung von Bestandteilen, beispielsweise Eiweißbestandteilen, statt. Die sensorische Qualität bleibt unverändert. Dies zeigt, dass durch das erfindungsgemäße Verfahren zur Herstellung des Mischgetränks eine erhöhte proteolytische Stabilität des Getränks erreicht werden konnte und chemische Reaktionen der vielen Inhaltsstoffe unterbunden werden konnten.

## Patentansprüche

1. Mischgetränk umfassend 90 bis 99,9 Gew.-% einer fermentierten Flüssigkeit und 0,09 bis 5 Gew.-% einer Aromastoffzusammensetzung, **dadurch gekennzeichnet, dass** die Aromastoffzusammensetzung 10 bis 40 Gew.-% mindestens eines Aromastoffs ausgewählt aus der Gruppe bestehend aus natürlichen Aromastoffen, künstlichen Aromastoffen, naturidentischen Aromastoffen, Raucharomastoffen, Aromaextrakten und Reaktionsaromen und 60 bis 90 Gew.-% Ethanol, Propylenglykol, Branntwein oder Mischungen davon, jeweils bezogen auf die Aromastoffzusammensetzung, enthält.

2. Mischgetränk nach Anspruch 1, wobei es sich bei der fermentierten Flüssigkeit um eine fermentierte Maische handelt.

3. Mischgetränk nach Anspruch 2, wobei es sich bei der Maische um eine Getreidemaische, ausgewählt aus der Gruppe bestehend aus Weizen-, Gerste-, Hafer-, Roggen-, Dinkel-, Buchweizen-, Emmer-, Erbsen-, Bohnen-, und Reismaische; eine Kartoffelmaische; eine Maismaische; eine Zuckerrohrmaische; eine Zuckerrübenmaische; eine Ahornsirupmaische; eine Obstmaische ausgewählt aus der Gruppe bestehend aus Trauben-, Apfel-, Birnen-, Schlehen-, Himbeer-, Brombeer-, Preiselbeer-, Blaubeer-, Kirschen-, Aprikosen-, Mirabellen-, Pflaumen- und Zwetschgenmaische; und Mischungen aus einer oder mehrerer davon handelt.

4. Mischgetränk nach einem der Ansprüche 1 bis 3, wobei der mindestens eine Aromastoff ausgewählt wird aus der Gruppe bestehend aus: Fruchtaromen ausgewählt aus Apfel-, Birnen-, Kirsch-, Zitronen-, Limonen-, Orangen-, Grapefruit-, Cranberry-, Blaubeer-, Preiselbeer-, Quitten-, Himbeer-, Erdbeer-, Feigen-, Aprikosen-, Mirabellen-, Brombeer-, Pomelo-, Melonen-, Schlehen-, Pflaumen- und Zwetschgenaroma; Branntweinaromen ausgewählt aus Whiskey-, Sherry-, Rotwein-, Weißwein-, Cognac-, Rum-, Calvados-, Portwein-, Brandy-, Gin-, Absinth-, Wodka-, Grappa-, Cachaça-, Sekt-, Prosecco-, Champagner-, Marsala-, Dubonnet-, Vermouth-, Cynar-, Picon-, Tequila-, Raki-, Pastis-, Ouzo-, Suze-, Lillet-, Pommeau-, Sambuca-, Cassis- und Armagnacaroma; Kräuteraroma ausgewählt aus Waldmeister-, Pfefferminz-, Kamille-, Oregano-, Minze-, Salbei-, Rosmarin-, Thymian-, und Basilikum- und Melissenaroma; Gewürzaroma ausgewählt aus Zimt-, Anis-, Sternanis-, Piment-, Pfeffer-, Muskat-, Nelken-, Kardamon- und Chiliaroma; Teearoma ausgewählt aus Grüntee-, Schwarztee-, Roibusch-, Matetee- und Kombuchaaroma; Kaffeearoma; Schokoladenaroma; oder einer Mischung aus zwei oder mehr der vorgenannten.

5. Mischgetränk nach einem der Ansprüche 1 bis 4, wobei das Mischgetränk desweiteren eine Zuckerlösung und/oder eine Lösung aus einem Zuckeraustauschstoff umfasst.

6. Mischgetränk nach Anspruch 5, wobei es sich bei der Zuckerlösung um eine hydrolysierte Stärkelösung mit 60 bis 70 °Brix handelt.

7. Mischgetränk nach einem der Ansprüche 1 bis 6, wobei das Mischgetränk desweiteren eine Säure ausgewählt aus der Gruppe bestehend aus Zitronensäure, Äpfelsäure, Ascorbinsäure, Weinsäure, Milchsäure und Mischungen davon umfasst.

8. Mischgetränk nach einem der Ansprüche 1 bis 7, wobei der Branntwein ausgewählt ist aus der Gruppe bestehend aus Whiskey, Sherry, Rotwein, Weißwein, Cognac, Rum, Calvados, Portwein, Brandy, Gin, Absinth, Wodka, Grappa, Cachaça, Sekt, Prosecco, Champagner, Marsala, Dubonnet, Vermouth, Cynar, Picon, Tequila, Raki, Pastis, Ouzo, Suze, Lillet, Pommeau, Sambuca, Cassis und Armagnac sowie Mischungen davon.

9. Mischgetränk nach einem der Ansprüche 1 bis 8, wobei das Mischgetränk besteht aus:
90 bis 99,95 Gew.-% einer fermentierten Getreidemaische
0,02 bis 5 Gew.-% hydrolysierte Stärkelösung (55 bis 70 °Brix)
0,01 bis 0,5 Gew.-% Zitronensäure
0,02 bis 1,0 Gew.-% Aromastoffzusammensetzung,
wobei die Aromastoffzusammensetzung 20 bis 30 Gew.-% mindestens eines Aromastoffs oder eines Aromastoffgemisches und 70 bis 80 Gew.-% Branntwein, bezogen auf das Gesamtgewicht der Aromastoffzusammensetzung, enthält.

10. Mischgetränk nach Anspruch 9, wobei die Aromastoffzusammensetzung 25 Gew.-% Aromastoffgemisch bestehend aus Fruchtaroma, Branntweinaroma und Gewürzaroma und 75 Gew.-% Tequila, bezogen auf das Gesamtgewicht der Aromastoffzusammensetzung, enthält, oder wobei die Aromastoffzusammensetzung 25 Gew.-% Aromastoffgemisch bestehend aus Fruchtaroma, Branntweinaroma und Gewürzaroma und 75 Gew.-% Cachaça bezogen auf das Gesamtgewicht der Aromastoffzusammensetzung, enthält.

11. Verfahren zur Herstellung eines Mischgetränks nach einem der Ansprüche 1 bis 10 umfassend die Schritte:
a) Herstellen einer Aromastoffzusammensetzung
b) Mischen der Aromastoffzusammensetzung mit einer fermentierten Flüssigkeit,
wobei die Aromastoffzusammensetzung aus Schritt a) vor dem Durchführen von Schritt b) über einen Zeitraum von einer Stunde bis einem Monat gelagert wird.

12. Verfahren nach Anspruch 11, wobei zum Herstellen der Aromastoffzusammensetzung mindestens ein Aromastoff, vorzugsweise eine Aromastoffmischung, mit einer Alkoholkomponente, ausgewählt aus Ethanol, Propylenglykol oder Branntwein und Mischungen der genannten, vermischt wird.

13. Verfahren nach Anspruch 11 bis 12, wobei die Mischung aus Schritt a) des erfindungsgemäßen Verfahrens vor dem Durchführen von Schritt b) dekantiert oder gefiltert wird.

14. Verfahren nach Anspruch 13, wobei der Schritt des Dekantierens oder Filterns nach einem Schritt der Lagerung stattfindet.

## Claims

1. Mixed beverage containing 90% to 99,9% by weight of a fermented liquid and 0,09% to 5% by weight of a flavouring composition, the flavouring composition being **characterized by** containing 10% to 40% by weight of a flavouring selected in the group composed of natural flavourings, artificial flavourings, flavourings identical to natural flavourings, smoky flavourings, extracts of flavourings and reaction flavourings and 60% to 90% by weight ethanol, propylene glycol, spirits or mixings of those, in each case relating to the flavouring composition.

2. Mixed beverage according to claim 1, where the fermented liquid is a fermented mash.

3. Mixed beverage according to claim 2, where the mash is a cereal mash, selected in the group composed of wheat mash, barley mash, oat mash, rye mash, spelt mash, buckwheat mash, emmer mash, pea mash, bean mash and rice mash; a potato mash; a sugar cane mash; a maple syrup mash; a fruit mash selected in the group composed of apple mash, pear mash, blackthorn mash, raspberry mash, blackberry mash, cranberry mash, blueberry mash, cherry mash, apricot mash, Mirabelle plum mash, plum mash, zwetschge mash; and mixings of one or more of those.

4. Mixed beverage according to claims 1 to 3, where the flavouring is selected in the group composed of: fruit flavourings composed of apple flavouring, pear flavouring, cherry flavouring, lemon flavouring, green lemon flavouring, orange flavouring, grapefruit flavouring, cranberry flavouring, blueberry flavouring, lingonberry flavouring, quince flavouring, raspberry flavouring, strawberry flavouring, fig flavouring, apricot flavouring, mirabelle plum flavouring, blackberry flavouring, pomelo flavouring, melon flavouring, sloe flavouring, plum flavouring and zwetschge flavouring; spirit flavourings selected from whiskey flavouring, sherry flavouring, redwine flavouring, white wine flavouring, cognac flavouring, rum flavouring, calvados flavouring, port flavouring, brandy flavouring, gin flavouring, absinth flavouring, wodka flavouring, grappa flavouring, cachaça flavouring, sparkling wine flavouring, Prosecco flavouring, champagne flavouring, marsala flavouring, dubonnet flavouring, vermouth flavouring, cynar flavouring, picon flavouring, tequila flavouring, raki flavouring, pastis flavouring, ouzo flavouring, suze flavouring, lillet flavouring, pommeau flavouring, sambuca flavouring, cassis flavouring and armagnac flavouring; herb flavouring selected from cinnamon flavouring, anise flavouring, star anise flavouring, allspice flavouring, pepper flavouring, nutmeg flavouring, clove flavouring, cardamom flavouring, chili flavouring; tea flavouring selected from green tea flavouring, black tea flavouring, rooibos flavouring, mate tea flavouring and kombucha flavouring; coffee flavouring; chocolate flavouring; or a mixture of two or more of the aforementioned.

5. Mixed beverage according to claims 1 to 4, in which the mixed beverage contains furthermore a sugar solution and/or a solution of a sugar substitute.

6. Mixed beverage according to claim 5, in which the sugar solution is a hydrolysed starch solution with 60 to 70°Brix.

7. Mixed beverage according to claims 1 to 6, in which the mixed beverage furthermore contains an acid selected in the group composed of citric acid, malic acid, ascorbic acid, wine acid, lactic acid, and mixtures of those.

8. Mixed beverage according to claims 1 to 7, in which the spirit is selected in the group composed of whiskey, sherry, red wine, white wine, cognac, rum, calvados, port, brandy, gin, absinthe, vodka, grappa, cachaça, sparkling wine, Prosecco, champagne, marsale, Dubonnet, Vermouth, Cynar, picon, tequila, raki, pastis, ouzo, suze, lillet, pommeau, Sambuca, cassis and Armagnac, as well as mixtures of those.

9. Mixed beverage according to claims 1 to 8, in which the mixed beverage is composed of:
• 90% to 99,95% by weight of a fermented cereal mash
• 0,02% to 5% by weight of a hydrolysed starch solution (55 to 70°Brix)
• 0,01% to 0,5% by weight of citric acid
• 0,02% to 1,0% by weight of a flavouring composition,
in which the flavouring composition contains at least 20% to 30% of mass of a flavouring or mixture of flavourings, and 70% to 80% of mass of spirit, based on the total mass of the flavouring composition.

10. Mixed beverage according to claim 9, in which the flavouring composition contains 25% by weight of a flavouring mixture consisting of fruit flavouring, spirit flavouring and herb flavouring and 75% by weight tequila, based on the total mass of the flavouring composition, or in which the flavouring composition contains 25% by weight of a flavouring mixture composed of fruit flavouring, spirit flavouring and herb flavouring and 75% by weight cachaça, based on the total mass of the flavouring composition.

11. Method of production of a mixed beverage according to claims 1 to 10 including the steps:
a) producing a flavouring composition
b) mixing the flavouring composition with a fermented liquid,
in which the flavouring composition of step a) is stored over a time frame of one hour to one month before executing step b).

12. Procedure according to claim 11, in which for producing the flavouring composition, at least one flavouring, preferably a mixture of flavourings, is mixed with an alcohol component, selected from ethanol, propylene glycol or spirit and mixture of the mentioned.

13. Procedure according to claim 11 to 12, in which the mixture from step a) of the inventively procedure is decanted or filtered before executing step b).

14. Procedure according to claim 13, in which the step of decanting or filtering happens after a step of storing.

## Revendications

1. Boisson mélangée comprenant 90% à 99,9% en poids d'un liquide fermenté et 0,09% à 5% en poids d'une composition d'arômes, **se caractérisant par** une composition d'arômes qui comporte au moins 10% à 40% en poids d'un arôme provenant d'un groupe d'arômes naturels, artificiels, identiques à des arômes naturels, arômes fumés, extraits d'arômes et arômes de réaction, et 60 à 90% en poids d'éthanol, propylène glycol, d'eau-de-vie ou mélanges de ces derniers, se référant respectivement à la composition de substances aromatisantes.

2. Boisson mélangée selon la revendication 1, où le liquide fermenté est un
moût fermenté.

3. Boisson mélangée selon la revendication 2, où le moût est un moût de
céréales, sélectionné dans le groupe se composant de moût de blé, d'orge, d'avoine, de seigle, d'épeautre, de sarrasin, d'amidonnier, de pois, de haricots, de riz ; un moût de patates ; un moût de maïs ; un moût de canne à sucre ; un moût de sirop d'érable ; un moût de fruits, sélectionné dans le groupe se composant de moût de raisins, de pommes, de poires, de prunelles, de framboises, d'airelles, de myrtilles, de cerises, d'abricots, de mirabelles, de prunes et de quetsches ; et de mélanges d'une ou de plusieurs d'entre eux.

4. Boisson mélangée selon les revendications 1 à 3, où au moins une
substance aromatisante est selectionné dans le groupe composé par : arômes de fruits selectionné d'arômes de pommes, poires, cerises, citrons, citrons verts, oranges, pamplemousses, canneberges, myrtilles, d'airelles, de coings, de framboises, de fraises, de figues, d'apricots, de mirabelles, de mûres, de pomelo, de melons, de prunelles, de prunes et de quetsches ; arômes d'eau-de-vie selectionnés dans des arômes de whiskey, sherry, vin rouge, vin blanc, cognac, rum, calvados, porto, brandy, gin, absinthe, vodka, grappa, cachaça, crémant, prosecco, champagne, marsala, dubonnet, vermouth, cynar, picon, tequila, raki, pastis, ouzo, suze, lillet, pommeau, sambuca, cassis et armagnac ; arômes d'herbes choisi dans des arômes d'aspérule odorante, menthe verte, camomille, origan, menthe poivrée, sauge, romarin, thym, basilique et mélisse ; Arômes d'épices selectionnés entre arômes de cannelle, anis, anis étoilé, piment, poivre, muscade, clou de girofle, cardamone et chili. Arômes de thé choisis entre arôme de thé vert, thé noir, rooibus, thé maté et arôme de kombucha ; arôme de café ; arôme de chocolat ; ou un mélange de deux ou plus de ces-derniers.

5. Boisson mélangée selon les revendications 1 à 4, où la boisson
mélangée comporte en plus une solution de sucre et/ou une solution de substitut de sucre.

6. Boisson mélangée selon la revendication 5, où la solution de sucre est un
amidon hydrolysé avec 60° à 70°Brix.

7. Boisson mélangée selon une des revendications 1 à 6, où la boisson
mélangée comporte en plus un acide choisi dans le groupes d'acides composé d'acide citrique, d'acide de pomme, d'acide d'ascorbique, d'acide de vin, d'acide lactique et de mélanges de ces-derniers.

8. Boisson mélangée selon une des revendications 1 à 7, où l'eau-devie
est sélectionnée dans le groupe composé de whiskey, sherry, vin rouge, vin blanc, cognac, rhum, calvados, porto, brandy, gin, absinthe, vodka, grappa, cachaça, crémant, prosecco, champagne, marsala, dubonnet, vermouth, cynar, picon, tequila, raki, pastis, ouzo, suze, lillet, pommeau, sambuca, cassis et armagnac tout comme mélanges de ces-derniers.

9. Boisson mélangée selon une des revendicatons 1 à 8, où la boisson mélangée est composée de :
• 90% à 99,95% en poids de moût de céréales fermenté
• 0,02% à 5% en poids d'amidon hydrolysé (55 à 70° Brix)
• 0,01% à 0,5% en poids d'acide citrique
• 0,02% à 1,0% en poids de composition de substances aromatisantes,
où la composition de substances aromatisantes contient 20% à 30% en poids au moins d'une substance aromatisante ou d'un mélange de substances aromatisantes et 70% à 80% en poids d'eau-de-vie, se référant à la masse totale de la composition de substances aromatisantes.

10. Boisson mélangée selon la revendication 9, où la composition de substances aromatisantes contient 25% en poids de mélange d'arômes composé d'arômes de fruits, d'arômes d'eau-de-vie, et d'arômes d'épices et 75% de poids se référant à la masse totale de la composition d'arômes.

11. Procédure pour la fabrication d'une boisson mélangée selon une des revendications 1 à 10 composée des étapes :
a) Fabrication d'une composition de substances aromatisantes
b) Mélange de cette composition de substances aromatisantes avec un liquide fermenté où la composition de substances aromatisantes de l'étape a) est stockée de 1heure à 1 mois avant l'étape b).

12. Procédure selon la revendication 11, où pour la fabrication de la
composition de substance aromatisante au moins une substance aromatisante, de préférence un mélange d'arômes, est mélangée à une composante alcoolique, choisie entre éthanol, propylène glycol ou eau-de-vie et mélanges de ces-dernières.

13. Procédure selon la revendication 11 et 12, où le mélange de l'étape
a) selon la procédure de l'invention est décantée ou filtrée avant l'étape b).

14. Procédure selon la revendication 13, où l'étape de la décantation ou la
filtration se passe après une étape de stockage.
